# EUROPEAN PATENT APPLICATION

(11) **EP 3 067 811 A1**
(43) Date of publication of application: **14.09.2016**
(21) Application number: 15305375.6
(22) Date of filing: 12.03.2015
(51) Int. Cl.: G06F 21/31, G06F 21/45

(54) **APPARATUS AND METHOD FOR PASSWORD AUTHENTICATION**

(71) Applicant: Thomson Licensing, 92130 Issy-les-Moulineaux (FR)
(72) Inventor: Joye, Marc, 35576 Cesson Sévigné (FR); Stahl, Niclas, 92443 Issy-les-Moulineaux (FR)
(74) Representative: Browaeys, Jean-Philippe

(57) **Abstract**

A method and an apparatus (110) for processing a password entry. A processing unit (111) of the apparatus (110) receives (S31) the password entry, obtains (S32) redundancy information for the password entry, performs (S33) error correction on the password entry to obtain a processed password entry and sends (S24) the processed password entry to a server (120). Error correcting codes may be used to perform the error correction. The (120) server may be implemented by the device that determines the correctness of the processed password entry and authenticates the password entry. The redundancy information may be retrieved from internal memory or an external unit such as a smartcard.

## Description

### TECHNICAL FIELD

The present disclosure relates generally to computer systems and in particular to the treatment of passwords in such systems.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Passwords are ubiquitous in today's computer systems, for example to authenticate a user for log-on. In its generic definition, a password is constituted of a succession of symbols taken within a predefined alphabet (for example: 4 numerical values for PIN code). A password is generally stronger the longer it is, in particular if the password is a mixture of uppercase and lowercase letters, numbers, and characters such as &, " and #. However, a more complicated password is generally more complicated to type properly, especially since the typed characters do not appear on the screen. In addition, since users may be obliged to input the passwords many times a day, the passwords are often typed very quickly. It is thus not surprising that an input password can contain typing errors. Moreover touchscreen-based devices like smartphones and tablets use virtual keyboards to enter some text, including passwords. With this type of input, typing errors can be quite frequent.

The prior art comprises a number of solutions that provide passwords that are resistant to typing errors.

The tool Password Variator builds a file with all possible variations on the password, emulating up to three typographical errors such as missed characters, duplicated characters, extra characters, wrong order and wrong case. Andrew Mehler and Steven Skiena provide a different solution in Improving Usability Through Password-Corrective Hashing. Their solution processes the password before hashing - for example by sorting the input password alphabetically to correct transpositions - so that it is likely that a slightly misspelt password hashes to the same hash value as the correct password. It is evident that such multiplication of "acceptable" passwords drastically reduces the strength of the password since many different passwords hash to the same value, including passwords that differ from much more than one or two typographical errors.

The solutions in US 7373516 and JP 2005/208763 compare an input password with a stored password in the "password space," i.e. in the clear, to determine if the former is "similar" to the latter. However, since these solutions require a comparison of the plaintext versions of the password, they cannot be used in real systems where storing the password in clear is generally unacceptable for obvious security reasons. Generally, authentication is handled by a server that stores a hashed version of the password, to be compared with a hashed version of the password entry typed by the user. This is to make stealing of the passwords file less valuable.

GB 2446420 teaches an information retrieval system where the password of a user is mapped, in a manner that is unique for the user, to a Galois field element such that the element is equal to a code word of an error correcting code. The skilled person will appreciate that the solution is cumbersome since it requires individual maps for the users.

JP 2007-114976 teaches a device, such as a PC, that among other things provides the function of keeping a count of the number of times a mistyped password is input and storing a mistyped password as an acceptable password when the number of times is sufficiently large, e.g. ten times. The skilled person will appreciate that the solution is insecure since there does not appear to be any control of the addition of the mistyped passwords; when a wrong password has been input ten times, it is stored as an acceptable password, which means that a hacker only needs to input a password ten times to have it accepted.

It can therefore be appreciated that there is a need for a solution that can allow an authentication system to authenticate a user based on mistyped passwords without having the drawbacks of the prior art solutions. The present disclosure provides such a solution.

### SUMMARY OF DISCLOSURE

In a first aspect, the disclosure is directed to an apparatus for processing a password entry comprising a first interface configured to receive the password entry, a redundancy retrieval unit configured to access redundancy information resulting from a derivation function applied to a reference password, an error correction unit configured to perform error correction on the password entry using the redundancy information to obtain a processed password entry, and a second interface configured to send the processed password entry to a server.

Various embodiments comprise:
- That the apparatus further comprises internal memory configured to store the redundancy information and that the redundancy retrieval unit is configured to access the redundancy information by reading the redundancy information from the internal memory.
- That the apparatus further comprises a third interface configured to enable the redundancy retrieval unit to access the redundancy information from a further unit external to the apparatus and connected to the apparatus through the third interface. It is advantageous that the further unit is a smartcard and the third interface is a smartcard reader.
- That the error correction unit is configured to use an error correcting code to perform the error correction.
- That the apparatus further comprises the server.
- That the error correction unit is further configured to generate redundancy information for a reference password, to store the redundancy information for the reference password, and to send the reference password to the server.

In a second aspect, the disclosure is directed to a method for processing a password entry. A processing unit of an apparatus receives the password entry, obtains redundancy information for the password entry, performs error correction on the password entry to obtain a processed password entry, and sends the processed password entry to a server.

Various embodiments comprise:
- That the processing unit determines the correctness of the processed password entry and authenticates the processed password entry in case the processed password entry is determined to be correct.
- That the apparatus further comprises internal memory configured to store the redundancy information and that the redundancy information is obtained by reading the redundancy information from the internal memory.
- That the apparatus further comprises a third interface and that the redundancy information is obtained by accessing the redundancy information from a further unit external to the apparatus and connected to the apparatus through the third interface.
- That the processing unit uses an error correction code to perform the error correction.

In a third aspect, the disclosure is directed to a computer program comprising program code instructions executable by a processor for implementing the steps of a method according to any embodiment of the second aspect.

In a fourth aspect, the disclosure is directed to a computer program product which is stored on a non-transitory computer readable medium and comprises program code instructions executable by a processor for implementing the steps of a method according to any embodiment of the second aspect.

### BRIEF DESCRIPTION OF DRAWINGS

Preferred features of the present disclosure will now be described, by way of non-limiting example, with reference to the accompanying drawings, in which
Figure 1 illustrates an exemplary system in which the disclosure may be implemented;
Figure 2 illustrates an exemplary method of password and redundancy information processing according to an embodiment; and
Figure 3 illustrates an exemplary method of password authentication according to an embodiment.

### DESCRIPTION OF EMBODIMENTS

The disclosure relates particularly to treatment of passwords, which will be used herein as a non-limitative example. It should however be understood that other kinds of data may be used instead of passwords.

A general idea is to use an error correcting code (ECC) to correct errors in an input password. The ECC may be any suitable code, such as for example a Hamming code, a Reed-Solomon code, a BCH or a Golay code, all of which are well known to the person skilled in the art.

During creation of the reference password for the user, redundancy information is generated using a function that depends on the ECC used. In some instances it is preferable to use interleaving, possibly padding the password to a multiple of 8 characters, before generation of the redundancy information, particularly when an ECC that operates on the bit level is used. Such an interleaving may iteratively take one or more bits from each input byte of the password until all the bits have been used.

The generated redundancy information is then stored for use when the user inputs the password to correct typing errors using the ECC error correction method based on the redundancy information. It will be appreciated that the number of errors that can be corrected depends on the ECC error correction method that is used.

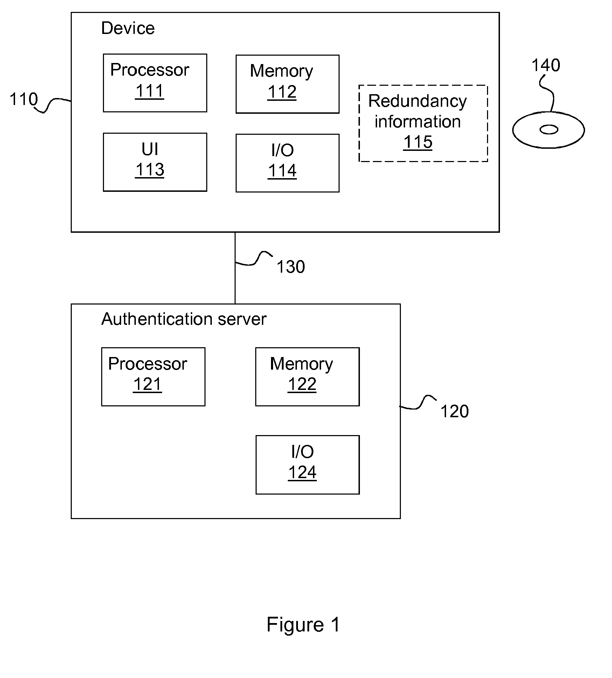

Figure 1 illustrates an exemplary system in which the disclosure may be implemented. The system comprises a computing device (hereinafter "device") 110 and an authentication server 120. The device 110 and the authentication server (hereinafter "server") 120 can be any kind of suitable computer or device capable of performing calculations, such as a standard Personal Computer (PC) or workstation. The device 110 and the server 120 each preferably comprise at least one processing unit ("processor") 111, 121, internal or external memory 112, 122, a user interface 113 for interacting with a user, and a second interface 114, 124 for interaction with other devices over connection 130. The device 110 and the server 120 each also preferably comprise an interface for reading a software program from a digital data support 140 that stores a computer program comprising instructions that, when executed by a processing unit, performs any of the password methods described hereinafter. The skilled person will appreciate that the illustrated devices are simplified for reasons of clarity and that real devices in addition may comprise features such as persistent storage. The skilled person will appreciate that the present disclosure may also be implemented on just the device 110 if the password just provides access to the device itself; in this case, the server 120 is implemented in the device.

In an embodiment, the device 110 further comprises a unit 115 for accessing the redundancy information. The redundancy information may be stored in an internal memory of the device 110 in which case the unit 115 may be implemented in the processing unit 111 by a simple read instruction. The redundancy information may also be stored in an external unit (not shown) such as a smartcard or a flash drive preferably directly connected to the device 110, in which case the unit 115 may be implemented in the processing unit and a suitable interface so that the redundancy information can be read from the external unit. In the preferred embodiment, the device 110 further comprises a unit, advantageously implemented in the processing unit 111, for generating the redundancy information from an input reference password and for storing the redundancy information where it can be read by the unit 115.

In an alternate embodiment, the redundancy information is stored by the server 120 in any suitable location. In the alternate embodiment, the server 120 can also generate the redundancy information at reception of the reference password from the device 110. It is noted that in the instance that the server 120 is implemented on the device 110, the preferred embodiment and the alternate embodiment are functionally equivalent. In another alternative embodiment, the redundancy information is stored by both the device 110 and the server 120

In the first preferred embodiment, the processing unit 111 is configured to receive the password, input by a user through the user interface 113 or received from a further device on which the user input the password, to use the redundancy information obtained by the unit 115 and the ECC error correction to correct errors in the received password and to send the corrected password to the server 120.

It is preferred that the password, corrected or not, is protected during the transfer from the device 110 to the server 120, in particular if these are not co-located. Such protection, which is well known in the art, may include encryption and salts.

It will be noted that in case the unit 115 cannot access the redundancy information - this may for example happen if the smartcard is not present - then there are at least two ways of handling this. First, the processing unit 111 simply does not try to correct any errors at all; second, the processing unit 111 generates the redundancy information from the input password and uses the generated redundancy information to correct the input password. In the first instance, no errors will be corrected. In the second instance, an incorrectly input password results in incorrect redundancy information, which means that not all errors may be corrected, indeed, the incorrect redundancy information may even add errors to the input password. It is thus an advantage to implement the error correction in the device 110 on which the user inputs the password, since only passwords input on the device 110 can be corrected, while passwords input on other devices cannot be corrected. This leads to an increase in security, while being transparent to the user as long as the device is used.

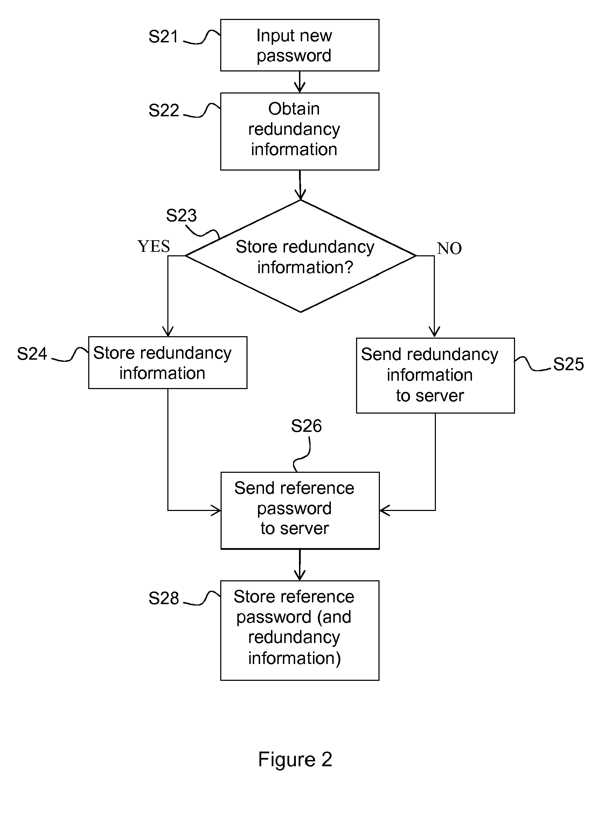

Figure 2 illustrates an exemplary method of processing password and redundancy information. The Figure illustrates both the case where the redundancy information is stored on the device 110 and on the server 120. Only the password is used in the example, while a corresponding user name would be used in at least some implementations as is well known.

In step S21, the user inputs a reference password using the user interface 113 of the device 110 that, in step S22, generates redundancy information as described.

The device 110 determines, in step S23, if it should store the redundancy information or send this to the server 120. In the instance where the redundancy information is to be stored by the device, the device stores, in step S24, the redundancy information, possibly on a removable storage unit such as a smartcard. In the other case, the device 110 sends the redundancy information to the server 120 in step S25.

The device 110 sends, in step S26, the reference password to the server 120 for storage. In the instance where the redundancy information is sent to the server 120, steps S25 and S26 may be implemented as a single step in which both are transmitted. The skilled person will appreciate that it is possible, even preferable, to use so-called salts and encryption/authentication - such as the Secure Authenticated Channel (SAC) described in WO 2006/048043 - to protect the scrambled reference password (and, if transferred, the redundancy information) further during the transfer to the server 120, but this will not be described as it is well known to the skilled person and beyond the scope of the present disclosure.

In step S28, the server 120 stores the reference password and, possibly, the redundancy information for future use.

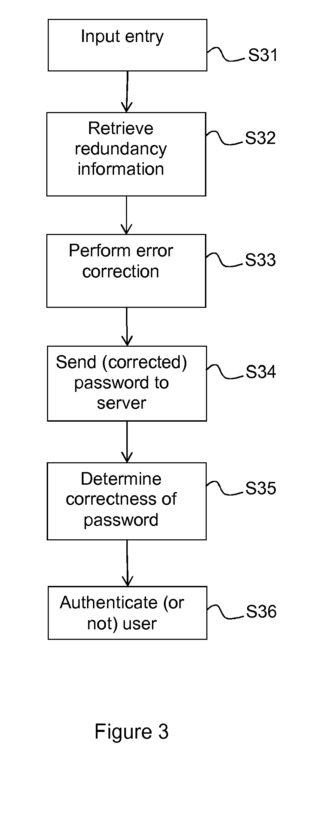

Figure 3 illustrates an exemplary method of password authentication according to an embodiment. Like in Figure 2, only the password is used in the example, but only the instance where the device 110 stores the redundancy information is shown; the skilled person will readily modify the embodiment to obtain the instance where it is stored on the server 120.

In step S31, the device 110 receives, through the user interface 113, a password entry (hereafter named entry) input by the user. The device retrieves, in step S32, the stored redundancy information and uses this, in step S33, to perform error correction on the entry. In step S34, the device 120 sends the possibly corrected entry to the server 120.

The device then determines, in step S35, the correctness of the received entry by comparing the received entry and the stored reference password, as is well known in the art. In the instance where the entry and the reference password match, the user is authenticated in step S36.

In a variant, the reference password is further used to generate a key, preferably by hashing the reference password. The key is then used in a keyed scrambling algorithm that scrambles input passwords.

A first example of such a scrambling algorithm first uses a keyed shuffling algorithm, wherein the key is at least part of the generated key. The shuffled password is then processed by a keyed character substitution algorithm, wherein each character is substituted by a character determined by the key. The character substitution key is at least part of the generated key, advantageously different from the shuffling key. A second example first uses keyed character substitution and then key shuffling.

In the variant, the redundancy information is based on the scrambled reference password.

A entry is in this variant first scrambled using the scrambling algorithm, error corrected using the redundancy information and then sent to the server 120.

An advantage of the variant is that even if a hacker were to obtain the redundancy information, this information is even more difficult to analyse in order to obtain hints about the password, since the redundancy information has been generated on a scrambled password using a key that, although generated from the reference password, can be seen as a random key according to the random oracle model.

It is possible that the server stores a particular hash value to be used when verifying the scrambled entry in order to increase resistance to errors. The particular hash value has some linear properties that enable to determine whether two strings are similar or not. A possible technique for obtaining such a particular hash values is called context triggered piecewise hashing (CTPH) and was described by Jesse Kornblum in "Identifying Almost Identical Files Using Context Triggered Piecewise Hashing". A byte of the resulting hash value depends on a limited number of bytes of the input data. Using such particular hash values it is thus possible for the server to determine that a scrambled reference password and a scrambled entry can be deemed to be similar if the corresponding hash values differ in, for example, a limited number of bytes.

It will be appreciated that the present disclosure can provide password system that is resistant to typing errors provided that the redundancy information is present.

The foregoing has provided by way of exemplary embodiments and non-limiting examples a description of the method and systems contemplated by the inventor. It is clear that various modifications and adaptations may become apparent to those skilled in the art in view of the description. However, such various modifications and adaptations fall within the scope of the teachings of the various embodiments described above.

The embodiments described herein may be implemented in, for example, a method or a process, an apparatus, a software program, a data stream, or a signal. Even if only discussed in the context of a single form of implementation (for example, discussed only as a method), the implementation of features discussed above may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described embodiments. For example, a signal may be formatted to carry the bit stream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analogue or digital information. The signal may be transmitted over a variety of different wired and/or wireless links, as is known. The signal may be stored on a processor-readable medium.

While several embodiments have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present embodiments.

## Claims

1. An apparatus (110) for processing a password entry comprising:
a first interface (113) configured to receive the password entry;
a redundancy retrieval unit (115) configured to access redundancy information resulting from a derivation function applied to a reference password;
an error correction unit (111) configured to perform error correction on the password entry using the redundancy information to obtain a processed password entry; and
a second interface (114) configured to send the processed password entry to a server (120).

2. The apparatus of claim 1, wherein the apparatus further comprises internal memory configured to store the redundancy information and wherein the redundancy retrieval unit (115) is configured to access the redundancy information by reading the redundancy information from the internal memory.

3. The apparatus of claim 1, wherein the apparatus further comprises a third interface configured to enable the redundancy retrieval unit (115) to access the redundancy information from a further unit external to the apparatus and connected to the apparatus through the third interface.

4. The apparatus of claim 3, wherein the further unit is a smartcard and the third interface is a smartcard reader.

5. The apparatus of claim 1, wherein the error correction unit is configured to use an error correction code to perform the error correction.

6. The apparatus of claim 1, wherein the apparatus further comprises the server (120).

7. The apparatus of claim 1, wherein the error correction unit is further configured to generate redundancy information for a reference password, to store the redundancy information for the reference password, and to send the reference password to the server (120).

8. A method for processing a password entry comprising at a processing unit (111) of an apparatus (110):
- accessing (S31) the password entry;
- obtaining (S32) redundancy information for the password entry;
- performing (S33) error correction on the password entry to obtain a processed password entry; and
- sending (S24) the processed password entry to a server (120).

9. The method of claim 8, further comprising at the processing unit:
- determining (S35) the correctness of the processed password entry; and
- authenticating (S36) the processed password entry in case the processed password entry is determined to be correct.

10. The method of claim 8, wherein the apparatus further comprises internal memory configured to store the redundancy information and wherein the redundancy information is obtained by reading the redundancy information from the internal memory.

11. The method of claim 8, wherein the apparatus further comprises a third interface and wherein the redundancy information is obtained by accessing the redundancy information from a further unit external to the apparatus and connected to the apparatus through the third interface.

12. The method of claim 8, wherein the processing unit uses an error correction code to perform the error correction.

13. Computer program comprising program code instructions executable by a processor for implementing the steps of a method according to at least one of claims 8 to 12.

14. Computer program product (140) which is stored on a non-transitory computer readable medium and comprises program code instructions executable by a processor for implementing the steps of a method according to at least one of claims 8 to 12.
